# EUROPEAN PATENT SPECIFICATION

(11) **EP 1 359 364 B1**
(45) Date of publication and mention of the grant of the patent: **31.01.2007**
(21) Application number: 03252707.9
(22) Date of filing: 29.04.2003
(51) Int. Cl.: F16L 41/18, F16L 5/02

(54) **Sealing device for a pipe leading through an opening in a wall**
Abdichtvorrichtung für die Wanddurchführung eines Rohres
Dispositif d'étanchéité pour la traversée murale d'un tuyau

(30) Priority: 29.04.2002 IT MI20020910
(43) Date of publication of application: 05.11.2003
(73) Proprietor: Nuovo Pignone Holding S.P.A., 50127 Florence (IT)
(72) Inventor: Pecchoioli, Mario, 59100 Prato (IT)
(74) Representative: Pedder, James Cuthbert

(56) References cited:
- DE-A- 3 803 492

## Description

The present invention relates to a sealing device for connection of a pipe in a hole.

In the art there are frequent cases in which a pipe must pass through a baffle which divides two areas. An example of such a case is shown in DE 3,803,492.

Often, the connection between the pipe, and a hole which is provided in the baffle, is rigid, and for example is produced by means of welding.

Sometimes, on the other hand, the connection between the pipe and the hole is free, with play.

This situation can be required for various reasons, for example in order to permit differential movements between the pipe and the baffle, or for reasons of thermal expansion to which the pipe is subjected.

In particular, in gas turbines, there exist pipes for internal cooling circuits, which connect an outer case of the turbine to an inner nozzle-holder ring, by passing through a divider baffle, which is also known as the nozzle sector.

In these cases, it is necessary to provide sealing devices in order to prevent passage of air in the space between the pipe and the hole.

In the known art, in the field of gas turbines, pipes are used which are provided with washers which are welded onto the outside of the pipes.

The washer is thrust against a surface, which for example is precision cast, of the divider baffle, by a spring which ensures that an area above the baffle is sealed relative to an area on the opposite side of the baffle.

However, the level of sealing obtained is not optimal, since it is difficult to obtain perfect contact between the washer and the surface of the baffle, owing both to geometric processing tolerances and to differentiated movements which exist between the outer case to which the pipe is coupled, and the divider baffle, which is secured to the inner nozzle-holder ring.

The present invention thus seeks to eliminate the disadvantage previously described, and in particular to provide a sealing device for connection of a pipe in a hole, which guarantees a high level of sealing, even in the presence of geometric differences of concentricity between the pipe and the hole.

Further, the invention seeks to provide a sealing device for connection of a pipe in a hole, which is particularly reliable, simple and functional, and has relatively low costs.

These objects and others according to the present invention are achieved by providing a sealing device for connection of a pipe in a hole, as described in claim 1.

Further characteristics are described in the subsequent claims.

Advantageously, the sealing device for connection of a pipe in a hole is used for a cooling pipe in a gas turbine, thus permitting a large saving in cooling air, but also in particular preventing blow-by which is undesirable and is difficult to assess.

The invention will now be described in greater detail, by way of example, with reference to the drawings, in which:-
Figure 1 is a view in lateral elevation, partially in cross-section, of a sealing device according to the known art, for connection of a cooling pipe in a hole in a divider baffle in a gas turbine;
Figure 2 shows an enlarged view in lateral elevation of the sealing device in figure 1;
Figure 3 is a view in lateral elevation, partially in cross-section, of a sealing device according to the present invention, for connection of a cooling pipe in a hole in a divider baffle in a gas turbine; and
Figure 4 shows an enlarged view in lateral elevation of the sealing device in figure 3.

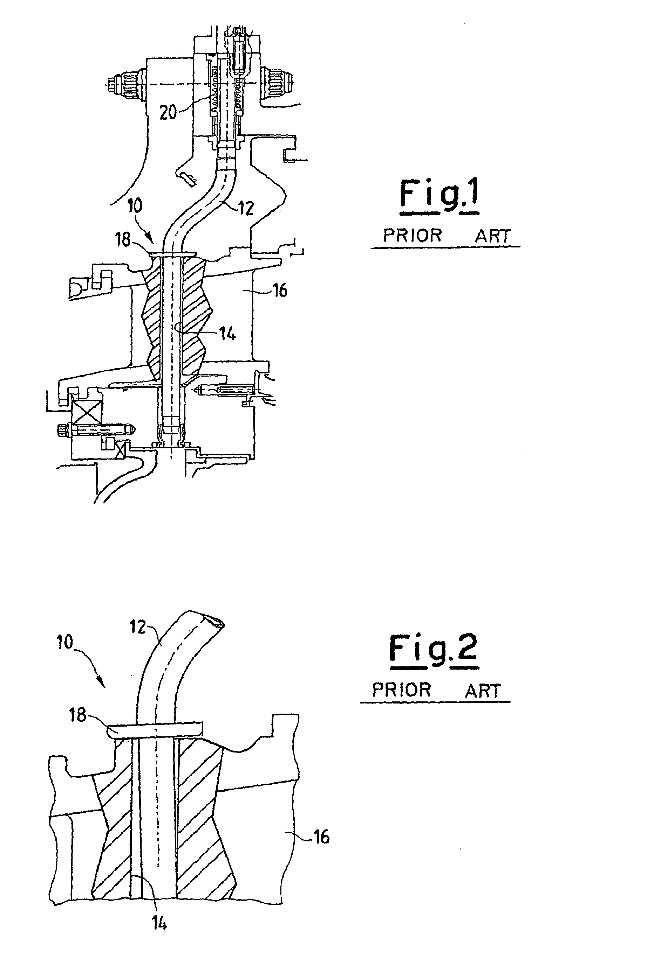

Figures 1 and 2 show a sealing device which is according to the known art, and is indicated as 10 as a whole, for connection of a cooling pipe 12 in a hole 14 in a divider baffle 16 in a gas turbine.

In the example illustrated, the device 10 comprises a washer 18 with an annular shape, with two flat bases and with a central hole with a diameter which is the same as the outer diameter of the pipe 12.

The washer 18 is threaded onto the outside of the pipe 12, and is joined to the latter, for example by being welded.

The washer 18 of the pipe 12 is thrust towards a flat surface of the baffle 16 in which the hole 14 is provided, by pressure means 20 such as a spring.

The spring 20 can be fitted on one end of the pipe 12 which faces the hole 14 in the baffle 16, and pre-loaded against a wall.

The functioning of the sealing device 10 according to the invention is clear from the foregoing description provided with reference to figure 1, i.e. it is implemented by means of the thrust action of the pressure means 20 which brings part of a base of the washer 18 into contact with the flat surface of the baffle 16 which is disposed around the hole 14.

Figure 2 shows a situation of imperfect sealing, with consequent passage of air between the pipe 12 and the hole 14, caused for example by imperfect coplanarity between the washer 18 and the flat surface around the hole 14.

Another cause of imperfect sealing can be inaccurate squareness between the axis of the washer 18 and the flat surface of the hole 14.

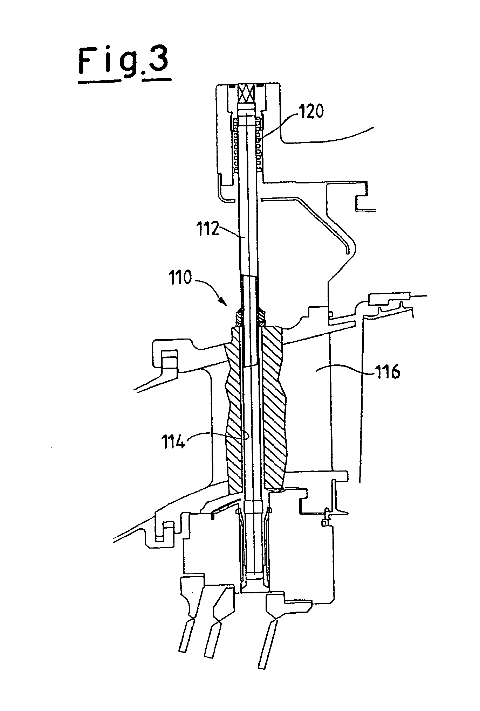

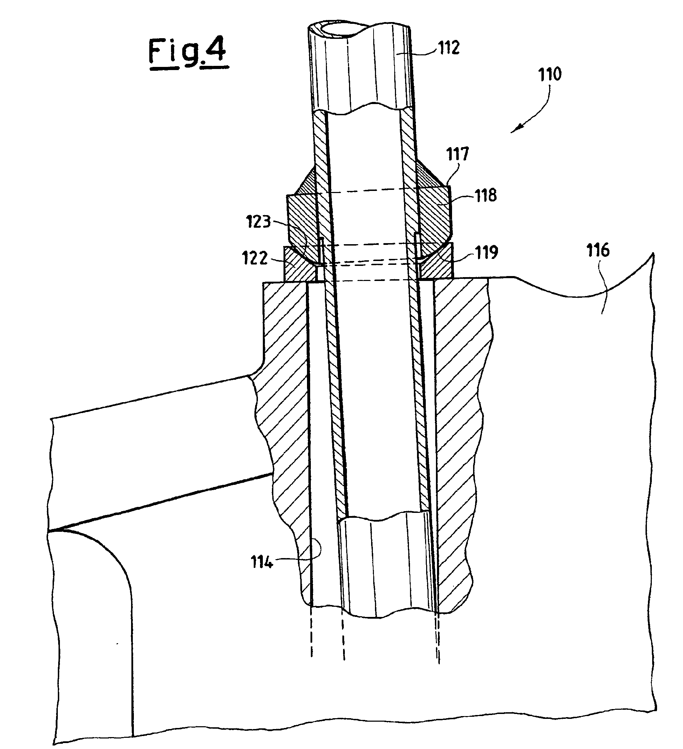

On the other hand, figures 3 and 4 illustrate a sealing device 110 according to the present invention, in which components which are the same as and/or equivalent to those illustrated in figures 1 and 2 have the same reference numbers increased by 100.

The sealing device 110 is used in the connection of a cooling pipe 112 in a hole 114 in a divider baffle 116 in a gas turbine.

In the example illustrated, the device 110 comprises a spherical washer 118 with an annular shape, with a central hole with a diameter which is the same as the outer diameter of the pipe 112.

The washer 118 has a flat base 117, and a base which is shaped according to an annular portion of spherical surface 119, with convexity towards the exterior of the washer 118 itself. In practice, this shape can be obtained by extending a base of a washer of a known type 18 which does not yet have a central hole, such as to obtain a spherical cap: at this point the central hole will be provided.

The spherical washer 118 is threaded onto the outside of the pipe 112, with the flat base 117 disposed on the side opposite the hole 114. The washer 118 is joined to the pipe 112, for example by being welded, using the flat base 117.

On a flat surface of the baffle 116, which is disposed around the hole 114, there is provided a conical washer 122 with an annular shape, with a central hole which has a diameter slightly larger than the outer diameter of the pipe 112, such that the pipe 112 can be inserted into it.

The washer 122 has a flat base and a base which is shaped according to a frusto-conical surface 123, with the smaller base disposed on the flat base side.

The flat base of the conical washer 122 is supported on the flat surface which surrounds the hole 114, such as to make the axis of the washer 122 parallel with that of the hole 114.

The spherical washer 118 of the pipe 112 is thrust towards the conical washer 122, which is applied to the baffle 116, by pressure means 120, such as a spring.

The spring 120 can be fitted on one end of the pipe 112 which faces the hole 114 in the baffle 116, thus pre-loading the spring against one wall.

The functioning of the sealing device 110 according to the invention is clear from the foregoing description provided with reference to figures 3 and 4, and briefly is as follows.

The thrust action of the pressure means 120 brings the annular portion of spherical surface 119 of the spherical washer 118 into contact with the frusto-conical surface 123 of the conical washer 122. More particularly, as known from the geometry, the contact takes place around a circumference.

This therefore prevents the problems of imperfect sealing caused by imprecise concentricity between the axis of the washer 118 and the axis of the hole 114.

Thus, even in the presence of axial movements between the pipe 112, which for example is secured to an outer case of the gas turbine, and the divider baffle 116, or in the presence of rotations of the pipe 112, the sealing is guaranteed.

In addition, the spherical washer 118, which is thrust by the spring 120, tends to centre itself in the conical washer 122, thus also centring the pipe 112.

It should be noted that the figures represent pipes with a circular cross-section, and it is apparent that it would not alter anything in the sealing device according to the invention if pipes with a different cross-section were used.

It is also apparent that the figures illustrate pipes which pass through the divider baffle, but it is clear that it would not alter anything in the sealing device according to the invention if use were made of pipes which do not pass through the divider baffle, but simply extend as far as the start of the hole in the divider baffle itself.

The description provided makes apparent the characteristics of the sealing device according to the present invention, for connection of a pipe in a hole, and also makes apparent the corresponding advantages, which, it will be remembered, include:
- optimal sealing with consequent saving of cooling air;
- elimination of blow-by of air, which is undesirable and is difficult to assess;
- simple and reliable use; and
- low costs, compared with the known art.

## Claims

1. A fitting comprising a pipe (112) for insertion into a hole (114) and sealed about a margin of the hole with the pipe free for limited play relative to the hole margin: a washer (118) having an annular shape and a central hole receiving said pipe, said washer and said pipe being sealingly secured to one another; said washer having a first spherically shaped annular surface portion (119) facing the margin of said hole; pressure means (120) for biasing the pipe and the washer for movement in a direction toward said hole with said spherical surface portion bearing against the margin of said hole; and
a second annular washer (122) having a central hole having a diameter larger than the outer diameter of said pipe and a frustroconically shaped annular surface portion in registration with and facing said first spherically shaped surface portion (119), **characterized by** said second washer having a flat base portion supported on a flat surface portion around the hole and having an axis parallel to an axis of the hole, said frustroconically shaped surface portion having a diameter greater than the diameter of said first spherically shaped surface portion and being formed on an opposite side of said second washer from said flat base portion, enabling said pipe and said washer limited play relative to the margin of the hole.

2. The fitting according to claim 1 wherein the pressure means (120) comprises a spring fitted at one end of the pipe (112) which faces the hole (114) and is preloaded against a wall.

3. The fitting according to claims 1 or 2 wherein the washer (118) has a flat base (117) which is used for the securing to said pipe (112) by means of welding.

4. The fitting according to any preceding claim wherein the spherical base (119) of the washer (118) has convexity towards the exterior of the washer (118) itself.

5. The fitting according to any preceding claim wherein the pipe (112) is a cooling pipe in a gas turbine which connects an outer case of the turbine with an inner nozzle holder ring, by passing through a divider baffle.

## Patentansprüche

1. Armatur mit einem Rohr (112) zur Einführung in ein Loch (114) wobei es um einen Rand des Loches herum abgedichtet ist, wobei das Rohr für ein eingeschränktes Spiel in Bezug auf den Lochrand frei ist; mit einem Dichtungselement (118) mit einer ringförmigen Form und einem das Rohr aufnehmenden zentralen Loch, wobei das Dichtungselement und das Rohr abgedichtet aneinander befestigt sind; wobei das Dichtungselement einen dem Rand des Loches gegenüberliegenden ersten sphärisch gestalteten ringförmigen Oberflächenabschnitt (119) aufweist; mit einer Druckeinrichtung (120) zum Vorspannen des Rohrs und des Dichtungselements zur Bewegung in einer Richtung auf das Loch zu, wobei der sphärische Oberflächenabschnitt an dem Rand des Loches aufliegt; und mit einem zweiten ringförmigen Dichtungselement (122) mit einem zentralen Loch mit einem größeren Durchmesser als der Außendurchmesser des Rohres und einem kegelstumpfförmig gestalteten ringförmigen Oberflächenabschnitt, der zu und dem sphärisch geformten ersten Oberflächenabschnitt (119) ausgerichtet und diesem gegenüberliegend angeordnet ist,
**dadurch gekennzeichnet, dass**
das zweite Dichtungselement einen auf einem ebenen Oberflächenabschnitt um das Loch herum gelagerten ebenen Basisabschnitt und eine zu einer Achse des Loches parallele Achse aufweist, wobei der kegelstumpfförmig gestaltete Oberflächenabschnitt einen größeren Durchmesser als der Durchmesser des ersten sphärisch gestalteten Oberflächenabschnittes aufweist und auf einer dem ebenen Basisabschnitt gegenüberliegenden Seite des zweiten Dichtungselementes ausgebildet ist, was dem Rohr und dem Dichtungselement ein eingeschränktes Spiel in Bezug auf den Rand des Loches ermöglicht.

2. Armatur nach Anspruch 1, wobei die Druckeinrichtung (120) eine auf ein Ende der Rohrs (112) aufgesetzte Feder aufweist, welche dem Loch (114) gegenüberliegt und gegen eine Wand vorgespannt ist.

3. Armatur nach Anspruch 1 oder 2, wobei das Dichtungselement (118) eine ebene Basis (117) aufweist, welche zum Befestigen des Rohres durch Schweißen verwendet wird.

4. Armatur nach einem der vorstehenden Ansprüche, wobei die sphärische Basis (119) des Dichtungselementes (118) eine zu der Außenseite des Dichtungselementes (118) selbst gerichtete Konvexität aufweist.

5. Armatur nach einem der vorstehenden Ansprüche, wobei das Rohr (112) ein Kühlrohr in einer Gasturbine ist, welches ein Außengehäuse der Turbine mit einem inneren Düsenhaltering verbindet, indem es durch ein Teilerblech hindurchtritt.

## Revendications

1. Raccord comprenant un tuyau (112) destiné à être introduit dans un trou (114) et étanchéifié autour du bord du trou, le tuyau étant libre dans un jeu limité par rapport au bord du trou ; une rondelle (118) ayant une forme annulaire et un trou central recevant ledit tuyau, ladite rondelle et ledit tuyau étant fixés l'un à l'autre de manière étanche ; ladite rondelle ayant une première partie de surface annulaire de forme sphérique (119) tournée vers le bord dudit trou ; un moyen de pression (120) pour pousser le tuyau et la rondelle dans un mouvement en direction dudit trou, ladite partie de surface sphérique reposant contre le bord dudit trou ; et
une seconde rondelle annulaire (122) ayant un trou central ayant un diamètre plus grand que le diamètre extérieur dudit tuyau et une partie de surface annulaire de forme tronconique en positionnement avec et tournée vers ladite première partie de surface de forme sphérique (119), **caractérisé en ce que** ladite seconde rondelle a une partie de base plate supportée sur une partie de surface plate autour du trou et a un axe parallèle à l'axe du trou, ladite partie de surface de forme tronconique ayant un diamètre plus grand que le diamètre de ladite première partie de surface de forme sphérique et étant formée sur une face de ladite seconde rondelle opposée à ladite partie de base plate, laissant audit tuyau et à ladite rondelle un jeu limité par rapport au bord du trou.

2. Raccord selon la revendication 1, dans lequel le moyen de pression (120) comprend un ressort ajusté sur une extrémité du tuyau (112), qui est tourné vers le trou (114) et préchargé contre un mur.

3. Raccord selon les revendications 1 ou 2, dans lequel la rondelle (118) a une base plate (117) qui est utilisée pour la fixation audit tuyau (112) au moyen d'un soudage.

4. Raccord selon l'une quelconque des revendications précédentes, dans lequel la base sphérique (119) de la rondelle (118) présente une convexité vers l'extérieur de la rondelle (118) elle-même.

5. Raccord selon l'une quelconque des revendications précédentes, dans lequel le tuyau (112) est un tuyau de refroidissement dans une turbine à gaz reliant le carter extérieur de la turbine à une bague support de buse interne, en traversant une chicane de séparation.
